# EUROPÄISCHE PATENTSCHRIFT

(11) **EP 4 140 268 B1**
(45) Veröffentlichungstag und Bekanntmachung des Hinweises auf die Patenterteilung: **20.08.2025**
(21) Anmeldenummer: 21193226.4
(22) Anmeldetag: 26.08.2021
(51) Int. Cl.: A01B 33/02, A01B 33/08, A01B 51/02

(54) **UMKEHRFRÄSE**
REVERSE CUTTER
ENFOUISSEUSE

(43) Veröffentlichungstag der Anmeldung: 01.03.2023
(73) Patentinhaber: Rapid Technic AG, 8956 Killwangen (CH)
(72) Erfinder: Häfeli, Christian, 6332 Hagendorn (CH)
(74) Vertreter: Fenner, Seraina

(56) Entgegenhaltungen:
- DE-B3- 102007 031 106
- DE-T2- 69 629 163
- JP-A- 2002 191 201
- JP-A- 2006 081 518
- US-B1- 7 644 779
- US-B2- 6 860 334
- US-B2- 7 392 854

## Beschreibung

Die Erfindung betrifft eine Umkehrfräse zum frontseitigen Anbau und antriebsverbunden an einer einachsigen, Holmen geführten Arbeitsmaschine, sowie deren Verfahren zum Umsetzen oder Transportieren, beinhaltend ein Gehäuse, eine darin angeordnete sich quer zur Fahrtrichtung erstreckende Messerwelle, eine hinter dem Gehäuse angeordnete Schnellaushubeinheit, eine Siebeinheit, eine Tiefenführung zur Höheneinstellung der Schnellaushubeinheit, wobei die Schnellaushubeinheit, in einer Arbeitsstellung die Bodeneintauchtiefe der Messerwelle definiert und während eines Umsetzvorgangs oder Transports in einer Umsetz- oder Transportstellung als Stützwalze dient um die Messerwelle vom Boden abzuheben, wobei die Schnellaushubeinheit eine Walze und Schwenkelemente aufweist, wobei die Schnellaushubeinheit schwenkbar über die Schwenkelemente am Gehäuse befestigt ist.

Umkehrfräsen sind sowohl als Anbaugeräte für Traktoren wie auch an einachseigen Arbeitsmaschinen bekannt.

Umkehrfräsen werden dazu genutzt, um Böden für die Saat oder Neubepflanzung zu präparieren. Dadurch, dass die Messerwelle sich bei einer Umkehrfräse in entgegensetzte Richtung zur Arbeitsfahrtrichtung dreht wird die gesamte Bodenmasse über die Messerwelle gefördert. Durch eine im hinteren Bereich angeordnete Siebeinheit wird die feine Erde von den groben Erdklumpen und Steinen so getrennt, dass die groben Bestanteile nicht durch das Sieb fallen und gleich wieder in den Boden geführt werden. Die feine Erde, welche durch das Sieb hindurchtritt, überdeckt anschliessend die groben Bestanteile, indem die Erde mit einem dem Sieb anschliessenden Blech diese nach unten führt und dadurch die groben Bestandteile überdeckt. Durch dies Art der Bodenbearbeitung spielt die Eintauchtiefe der Messerwelle eine grosse Rolle, welche über eine dahinter angeordnete Walze definiert wird.

Zudem ist der Transport wie auch das Umsetzen von Bahn zu Bahn, die bearbeitet werden muss, bei Umkehrfräsen, die an einachsigen Antriebsmaschinen angebaut sind, ein körperlich anstrengendes Unterfangen, wenn die Walze der Umkehrfräse nicht auch als Stützwalze fungieren kann. Dann muss die Bedienperson die Arbeitsmaschine auf der einen Achse hochschwenken und die Maschine in einer geneigten Lage in der die Messerwelle den Boden nicht berührt zur nächsten Ausgansposition bringen bzw. schieben.

Die DE 10 2007 031 106 A1 offenbart eine Umkehrfräse bei der die Walze auch als Stützwalze zum Transport dient und dadurch das Umsetzen erleichtert.

Nachteilig hierbei ist aber der manuell zu betätigende Schnellschaltmechanismus, der zur Umpositionierung der Gitterwalze überhaupt erst betätigt werden muss, damit dies möglich ist. Einerseits muss die Bedienperson den Mechanismus der Vorrichtung jedes Mal beim Positionswechsel manuell betätigen, bevor er die Umkehrfräse umsetzen oder wieder in Arbeitsstellung bringen kann, wobei ein solcher Umsetzvorgang bei einer Bodenbearbeitung eines Feldes sehr häufig erfolgt, bis das Feld fertig bearbeitet ist. Zudem bringt ein solcher Mechanismus in einem so rauen Anwendungsbereich ein hohes Risiko an Störungen durch Verunreinigung mit sich und somit auch einen hohen Wartungsbedarf. DE 696 29 163 offenbart eine weitere, gattungsgemäße Umkehrfräse.

Es ist Aufgabe der Erfindung eine Umkehrfräse und ein damit verbundenes Verfahren vorzuschlagen, die der Bedienperson eine Erleichterung der Positionsänderung der Schnellaushubeinheit und eine damit verbundene Effizienzsteigerung erbringt.

Diese Aufgabe wird erfindungsgemäss gelöst durch eine Umkehrfräse nach Anspruch 1 und ein Verfahren nach Anspruch 11.

Die erfindungsgemässe Umkehrfräse dient dem frontseitigen Anbau an einer einachsigen, Holmen geführten Arbeitsmaschine. Die Umkehrfräse ist mit der Arbeitsmaschine antriebsverbunden, vorzugsweise über eine Zapfwelle, wobei auch andere Kupplungsmöglichkeiten vorstellbar sind. Die erfindungsgemässe Umkehrfräse beinhaltet ein Gehäuse, wobei dieses meist als Blechkonstruktion ausgebildet ist. Im Gehäuse ist eine sich quer zur Fahrtrichtung erstreckende Messerwelle angeordnet, wobei diese sich während des Vorgangs des Umkehrfräsens gegen die Arbeitsfahrtrichtung dreht. Des Weiteren beinhaltet die erfindungsgemässe Umkehrfräse eine in Arbeitsfahrtrichtung hinter dem Gehäuse angeordnete Schnellaushubeinheit. Diese weist eine Walze auf, die vorzugsweise als Gitterwalze ausgebildet ist, sowie Schwenkelemente. Die erfindungsgemässe Umkehrfräse beinhaltet auch eine Siebeinheit und eine Tiefenführung zur Höheneinstellung der Schnellaushubeinheit. Neben dem, dass über die Tiefenführung die Eintauchtiefe der Messer der Messerwalze aufgrund der Position der Walze bzw. der Schnellaushubeinheit in der Arbeitsstellung eingestellt wird, dient die Tiefenführung auch dazu, die Schnellaushubeinheit von der Arbeitsstellung in eine Umsetz- oder Transportstellung zu überführen, wobei die Umsetz- und die Transportstellung dieselbe Position der Schnellaushubeinheit ist und die Walze in dieser Position als Stützwalze dient. Die Schnellaushubeinheit mit der daran angeordneten Walze dient also in der Arbeitsstellung dazu, die Bodeneintauchtiefe der Messerwelle konstant zu definieren bzw. zu begrenzen und während eines Umsetzvorgangs oder Transports in einer Umsetz- oder Transportstellung als Stützwalze um die Messer der Messerwelle vom Boden abzuheben. Um die Schnellaushubeinheit jeweils in die andere Position zu bringen, ist die Schnellaushubeinheit frei schwenkbar über die Schwenkelemente am Gehäuse angeordnet. Die Schwenkelemente sind an einem Drehpunkt am Gehäuse frei schwenkbar gelagert bzw. angeordnet, das heisst die Schnellaushubeinheit ist nicht verriegelt oder arretiert. Die Schnellaushubeinheit hat einen gewissen Freiheitsgrad zwischen dem Endanschlag in Umsetz- oder Transportstellung und dem Anschlag der Tiefenführung in Arbeitsstellung in dem sich die Schnellaushubeinheit frei drehen bzw. um den Drehpunkt schwenken kann.

Zum Ausheben der Schnellaushubeinheit aus dem Boden schwenkt die Bedienperson die Arbeitsmaschine über ihre Antriebsachse hoch, wodurch sich die Schnellaushubeinheit um ihren Drehpunkt nach unten dreht bis hin zu einem Endanschlag, der die Umsetz- und Transportstellung vorgibt. Dann kann die Arbeitsmaschine wieder abgesetzt werden. In dieser Position verbleibt die Arbeitsmaschine mit Umkehrfräse solange die Umkehrfräse nur in die Umsetz- bzw. Transportfahrtrichtung bewegt wird.

Es ist vorteilhaft, wenn die Tiefenführung als verschiebbare Linearführung ausgebildet ist und beim Schwenken der Schnellaushubeinheit zwischen der Arbeits-, Umsetz- oder Transportstellungen sich autonom mitverschiebt bzw. verlagert. Das heisst, die Tiefenführung, welche im Lagerbock verschiebbar gelagert ist verschiebt sich entsprechend mit der Schnellaushubeinheit an der die Tiefenführung gelenkig befestigt ist.

Als vorteilhaft hat sich gezeigt, dass zur Festlegung der Umsetz- oder Transportstellung der Schnellaushubeinheit ein Endanschlag am Gehäuse angeordnet ist. Die Anordnung eines Endanschlags begrenzt die Schwenkbewegung der Schnellaushubeinheit in die eine Richtung.

Vorzugsweise ist die Tiefenführung als eine mechanische Linearführung ausgebildet. Dies ermöglicht es beim Positionswechsel der Schnellaushubeinheit von der Arbeitsin die Umsetzstellung oder umgekehrt, dass sich die Linearführung autonom anpasst und keine manuellen Anpassungen vorgenommen werden müssen.

Gemäss einer bevorzugten Ausführungsform ist die Tiefenführung an der Schnellaushubeinheit und am Gehäuse angeordnet, wobei die Tiefenführung, in die eine Richtung einen Anschlag aufweist und in der anderen Richtung frei verschiebbar ist. Dies ermöglicht es, dass die Schnellaushubeinheit in der Arbeitsstellung die Eintauchtiefe der Messerwelle definiert, indem der Anschlag in dieser Position zum Einsatz kommt und in der Gegenrichtung frei in die Umsetzstellung klappen bzw. schwenken kann. Die Tiefenführung ist vorzugsweise am Gehäuse festmontiert und gelenkig mit der Schnellaushubeinheit verbunden.

Als vorteilhaft hat sich gezeigt, wenn die Schnellaushubeinheit eine Trägervorrichtung zur Halterung der Walze aufweist. Dadurch kann die Walze darin gelagert werden. Sowohl die Schwenkelemente wie auch die Tiefenführung sind an der Trägervorrichtung angeordnet, von der die Walze gehalten ist.

Als vorteilhaft hat sich gezeigt, wenn die Tiefenführung einen am Gehäuse angeordneten Lagerbock und eine mit der Schnellaushubeinheit verbundene Tiefenführungsschiene aufweist, wobei die Tiefenführungsschiene im Lagerbock verschiebbar angeordnet ist. Als speziell bevorzugte Ausführungsform hat sich gezeigt, wenn die Tiefenführungsschiene aus Flachmaterial gebildet ist in dem zur Verstellung des daran angeordneten Anschlags Bohrungen angeordnet sind, die es ermöglichen den Anschlag auf verschiedenen Höhen zu positionieren und dadurch unterschiedliche Eintauchtiefen festzulegen.

Diese Aufgabe wird erfindungsgemäss auch dadurch gelöst, dass beim Verfahren zum Umsetzten oder Transportieren der Umkehrfräse die Schnellaushubeinheit durch Ausheben der Messerwelle aus dem Boden in die Position der Transportstellung oder Umsetzstellung klappt indem die Schnellaushubeinheit autonom um den Drehpunkt schwenkt bis zu einem Endanschlag und dort während der Fahrtrichtung in Umsetzfahrtrichtung verbleibt und erst bei einem Richtungswechsel in die Arbeitsfahrtrichtung autonom in die Position der Arbeitsstellung klappt.

Das erfindungsgemässe Verfahren zum Umsetzten oder Transportieren einer, an einer einachsigen, Holmen geführten Arbeitsmaschine, frontseitig angebauten Umkehrfräse beinhaltet, dass über eine einseitig, arretierende Tiefenführung die Bodeneintauchtiefe der Messerwelle eingestellt wird. Die nur einseitige Arretierung ermöglicht die autonome Umpositionierung der Schnellaushubeinheit von der Arbeitsstellung in die Umsetz- oder Transportstellung oder umgekehrt ohne jegliches Umstellen oder Verstellen durch die Bedienperson.

Das Bearbeiten einer Bearbeitungsspur des Bodens wird in Arbeitsfahrrichtung mittels der in den Boden, über die Schnellaushubeinheit definierten Eintauchtiefe für die Arbeitsstellung, eingetauchten Messerwelle bis zum Ende der Bahn durchgeführt. Wobei hierzu die einseitige Arretierung der Tiefenführung greift.

Anschliessend erfolgt das Umsetzen der Umkehrfräse an die Ausgangsposition einer anschliessenden Bearbeitungsspur und erneutes Bearbeiten der anschliessenden Bearbeitungsspur des Bodens in Arbeitsfahrtrichtung mittels der in den Boden, über die Schnellaushubeinheit definierten Eintauchtiefe für die Arbeitsstellung, eingetauchten Messerwelle bis zum Ender der Bearbeitungsspur. Zum Umsetzen oder Transportieren der Umkehrfräse wird die Walze der Schnellaushubeinheit als Stützwalze genutzt damit sich die Messerwelle oberhalb des Bodens befindet und die Umkehrfräse sich währenddessen in einer Transportstellung befindet.

Um die Umsetz- oder Transportstellung ausgehend von der Arbeitsstellung der Schnellaushubeinheit zu erhalten, klappt bzw. schwenkt die Schnellaushubeinheit, durch biosses Ausheben der Messerwelle aus dem Boden bzw. aus der Eintauchtiefe, in die Position der Transportstellung oder Umsetzstellung. Die Schnellaushubeinheit schwenkt durch das Hochschwenken der Arbeitsmaschine durch die Bedienperson, autonom um den Drehpunkt nach unten bis an den Endanschlag und verbleibt dort während der Fahrtrichtung in Umsetzfahrtrichtung. Erst bei einem Richtungswechsel in die Arbeitsfahrtrichtung klappt bzw. schwenkt die Schnellaushubeinheit autonom in die Position der Arbeitsstellung.

Alle Ausgestaltungmöglichkeiten sind untereinander frei kombinierbar wie die Vorrichtungsmerkmale mit den Verfahrensmerkmalen frei kombinierbar sind wie auch umgekehrt.

Ein Ausführungsbeispiel der Erfindung wird anhand der Figuren beschrieben, wobei sich die Erfindung nicht nur auf das Ausführungsbeispiel beschränkt. Es zeigen:
- Fig. 1: eine Schnittansicht einer erfindungsgemässen Umkehrfräse in Arbeitsstellung,
- Fig. 2: eine Schnittansicht einer erfindungsgemässen Umkehrfräse in Umsetz- oder Transportstellung und
- Fig. 3: eine Seitenansicht mit angekoppelter Arbeitsmaschine in Arbeitsstellung.

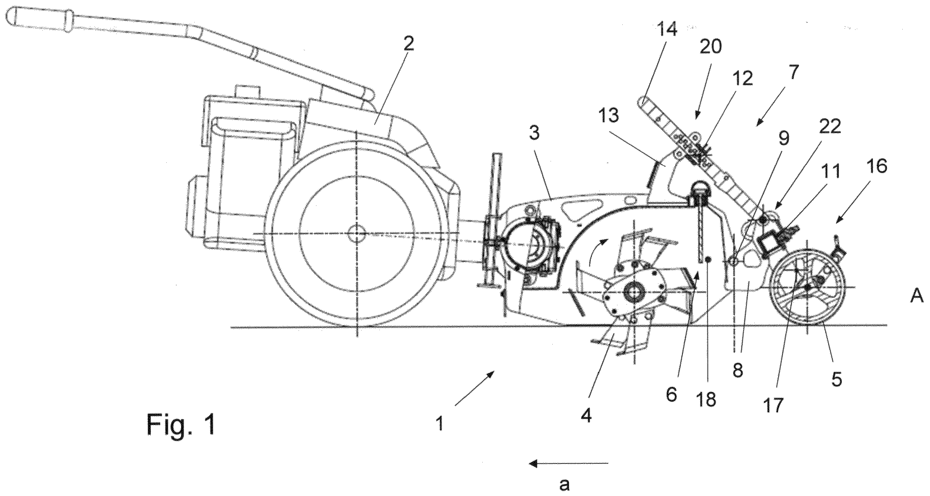

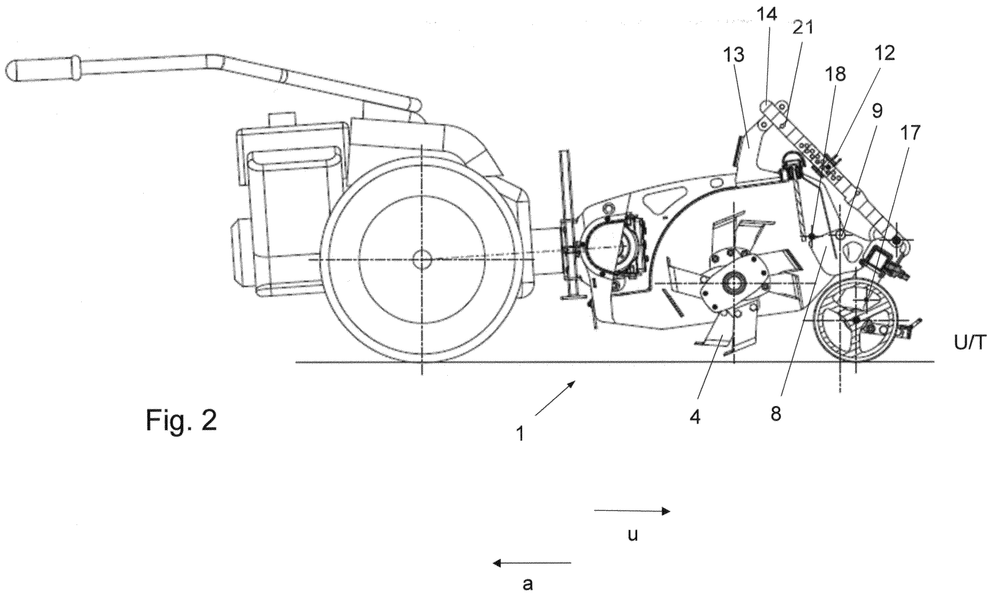

Die in Fig. 1 dargestellte Zeichnung zeigt die erfindungsgemässe Umkehrfräse 1 zum frontseitigen Anbau an eine Antriebsmaschine in Arbeitsstellung A in einer Schnittansicht. Die Umkehrfräse 1 beinhaltet ein Gehäuse 3 in dem eine Messerwelle 4 zur Bodenbearbeitung angeordnet ist. Zur Bearbeitung des Bodens ist die Messerwelle 4 in den Boden eingetaucht und dreht sich entgegen der Arbeitsfahrtrichtung a. Hinter dem Gehäuse 3 in Arbeitsfahrtrichtung a gesehen, ist eine Schnellaushubeinheit 16 angeordnet. Des Weiteren weist die erfindungsgemässe Umkehrfräse 1 eine Siebeinheit 6 zur Separierung der Bodenmasse sowie eine Tiefenführung 7 auf. Die Schnellaushubeinheit 16 beinhaltet eine Walze 5 sowie Schwenkelemente 8. Die Schwenkelemente 8 sind am Gehäuse 3 an einem Drehpunkt 9 frei schwenkbar befestigt und ermöglichen es dadurch der Schnellaushubeinheit 16 in die zwei unterschiedlichen Stellungen zu schwenken. Einerseits in die Position der Arbeitsstellung A wie in Fig. 1 gezeigt und anderseits in die Position der Umsetz- oder Transportstellung U/T wie in Fig. 2 gezeigt. Um die Schnellaushubeinheit 16 in die Umsetz- oder Transportstellung U/T zu schwenken muss nun nur die Umkehrfräse 1 aus dem Boden ausgehoben werden bzw. die Bedienperson die Antriebsmaschine hochschwenken. Dann klappt die Schnellaushubeinheit 16 aufgrund des Gewichts und der Anordnung des Schwerpunkts 17 nach unten bzw. schwenkt bis die Schwenkelemente 8 den Endanschlag 18 erreichen und verbleibt auch dort beim Abstellen bzw. Herunterschwenken der Antriebsmaschine 2 bzw. der Umkehrfräse 1. Es bedarf also keines Werkzeuges oder zusätzlicher Verstellung oder Einstellungen durch die Bedienperson, um die Stellung der Schnellaushubeinheit 16 zu wechseln.

Die Tiefenführung 7 dient der Höheneinstellung der Schnellaushubeinheit 16 in Arbeitsstellung A wie in Fig. 1 ersichtlich. Sie ist eine mechanische Linearführung, weshalb sie sich einfach verstellen und einstellen lässt. Die Tiefenführung 7 weist eine Tiefenführungsschiene 14 auf, die durch einen Lagerbock 13 der am Gehäuse 3 angeordnet ist geführt wird. Um die Eintauchtiefe der Messerwelle 4 zu definieren, ist ein Anschlag 12 an der Tiefenführungsschiene 14 angeordnet, der sich entlang dieser verschieben und über eine Rasterung 20 in unterschiedlicher Höhe einrasten lässt, gemäss der gewünschten Eintauchtiefe der Messerwelle 4. Vorzugsweise wird die Rasterung 20, wie in der abgebildeten Ausführungsform, durch Bohrungen gebildet. Mittels eines Bolzens, wie beispielsweise eines Splints, lässt sich die Position des Anschlags 12 verändern und dadurch die Eintauchtiefe der Messerwelle 4. Selbstverständlich sind aber auch andere Verrasterungen denkbar, um die Position des Anschlags 12 und dadurch die Eintauchtiefe festzulegen. Die Tiefenführungsschiene 14 ist an einem Ende mit der Schnellaushubeinheit 16 gelenkig verbunden und auf der gegenüberliegenden Seite im Lagerbock 13 frei gleitend gelagert. Die Schnellaushubeinheit 16 weist vorzugsweise eine Trägervorrichtung 11 auf, in der die Walze 5 gelagert ist sowie auch die Schwenkelemente 8 mit der Trägervorrichtung 11 verbunden sind. Zudem ist es vorteilhaft, wenn die gelenkige Anbindung 22 der Tiefenführungsschiene 14 ebenfalls an der Trägervorrichtung 11 befestigt ist.

Fig. 2 zeigt die Umkehrfräse 1 in der Stellung zum Umsetzten oder Transportieren U/T. Es ist gut zu erkennen, dass die Tiefenführung 7 nicht am Anschlag 12 ansteht, sondern, die Tiefenführungsschiene 14 weit ausgefahren ist. Solange nun die Umkehrfräse steht oder nur in die Umsetz- oder Transportrichtung u gefahren wird, bleibt die Schnellaushubeinheit 16 in dieser eingeklappten Position. Hat die Bedienperson die Umkehrfräse 1 fertig umgesetzt und befindet sich wieder in der Ausgangslage für das Bearbeiten einer Bearbeitungsspur, wechselt die Bedienperson einfach die Fahrtrichtung in die Arbeitsfahrtrichtung a, wodurch die Schnellaushubeinheit 16 wieder zurück in die Arbeitsposition schwenkt, bis zum Anschlag 12 an der Tiefenführung 7.

Zur Fixierung der Schnellaushubeinheit 16 in der Umsetz- oder Transportstellung U/T besteht die Möglichkeit den Anschlag 12 mit einer Verriegelung 21 am oberen Ende der Tiefenführungsschiene 14 zu fixieren, um das autonome Rückklappen der Schnellaushubeinheit 16 zu verhindern. Dies wird aber in der Regel nur bei Transporten gemacht und nicht wenn die Umkehrfräse im Einsatz steht.

Der Endanschlag 18 dient der Begrenzung der Schwenkbewegung der Schnellaushubeinheit 16 und ist vorzugsweise am Gehäuse 3 angeordnet.

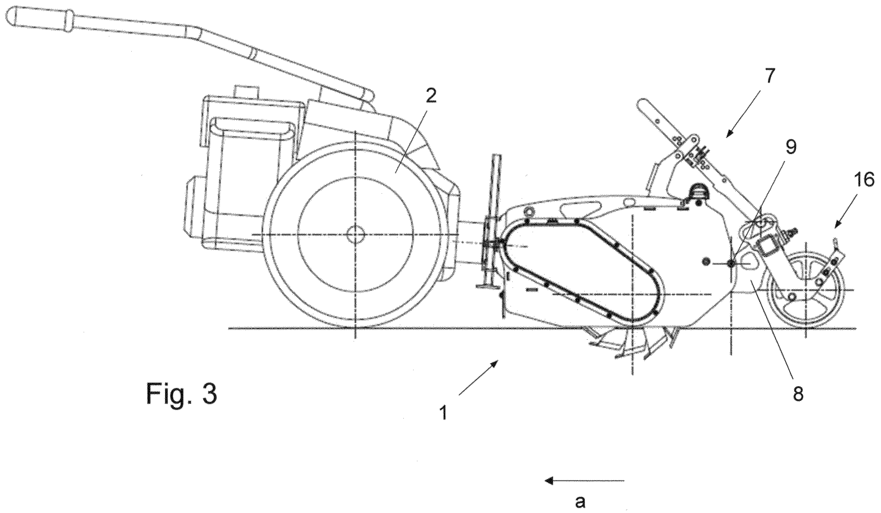

Fig. 3 zeigt eine Seitenansicht einer erfindungsgemässen Umkehrfräse 1, die mit einer Arbeitsmaschine 2 verbunden ist. Die Schnellaushubeinheit 16 ist in der Arbeitsstellung A gezeigt und wird in die Arbeitsfahrtrichtung a bewegt. Herbei dient nun wie in Fig. 1 gezeigt die Schnellaushubeinheit 16 als Begrenzung für die Eintauchtiefe der Messerwelle 4.

### Bezugszeichenliste

- 1: Umkehrfräse
- 2: Arbeitsmaschine
- 3: Gehäuse
- 4: Messerwelle
- 5: Walze
- 6: Siebeinheit
- 7: Tiefenführung
- 8: Schwenkelement
- 9: Drehpunkt
- 11: Trägervorrichtung
- 12: Anschlag
- 13: Lagerbock
- 14: Tiefenführungsschiene
- 16: Schnellaushubeinheit
- 17: Schwerpunkt Schnellaushubeinheit
- 18: Endanschlag
- 20: Rasterung
- 21: Verriegelung
- 22: Gelenkige Anbindung

- A: Arbeitsstellung
- U: Umsetzvorgang / Umsetzstellung
- T: Transport / Transportstellung

- a: Arbeitsfahrtrichtung
- u: Umsetz- /Transportfahrtrichtung

## Patentansprüche

1. Umkehrfräse (1) zum frontseitigen Anbau und antriebsverbunden an einer einachsigen, Holmen geführten Arbeitsmaschine (2), beinhaltend ein Gehäuse (3), eine darin angeordnete sich quer zur Fahrtrichtung erstreckenden Messerwelle (4), eine, in Arbeitsfahrtrichtung a gesehen, hinter dem Gehäuse (3) angeordnete Schnellaushubeinheit (16) eine Siebeinheit (6), eine Tiefenführung (7) zur Höheneinstellung der Schnellaushubeinheit (16), wobei die Schnellaushubeinheit (16), in der Arbeitsstellung (A) die Bodeneintauchtiefe der Messerwelle (4) definiert und während des Umsetzvorgangs (U) oder Transports (T) in einer Umsetz- oder Transportstellung (U, T) als Stützwalze dient um die Messerwelle (4) vom Boden abzuheben, wobei die Schnellaushubeinheit (16) eine Walze (5) und Schwenkelemente (8) aufweist, wobei die Schnellaushubeinheit (16) schwenkbar über die Schwenkelemente (8) am Gehäuse (3) befestigt ist, wobei die Schwenkelemente (8) an einem Drehpunkt (9) am Gehäuse (3) frei schwenkbar gelagert bzw. angeordnet sind, und die Schnellaushubeinheit (16) durch blosses Schwenken der Schnellaushubeinheit (16) um den Drehpunkt (9) in die Arbeitsstellung (A) oder in die Umsetz- oder Transportstellung (U, T) bringbar ist, **dadurch gekennzeichnet, dass** die Schnellaushubeinheit (16) zwischen einem Endanschlag (18) in der Umsetz- oder Transportstellung (U, T) und einem Anschlag (12) in Arbeitsstellung (A) frei schwenkbar angeordnet ist, ohne jegliche Arretierungen.

2. Umkehrfräse (1) nach Anspruch 1 , **dadurch gekennzeichnet, dass** der Anschlag (12) für die Arbeitsstellung (A) an der Tiefenführung (7) angeordnet ist

3. Umkehrfräse (1) nach einem der Ansprüche 1 oder 2, **dadurch gekennzeichnet, dass** die Tiefenführung (7) als Linearführung und linear verschiebbar ausgebildet ist und beim Schwenken der Schnellaushubeinheit (16) zwischen den Stellungen (A, U; T) sich autonom mitverschiebt.

4. Umkehrfräse (1) nach einem der Ansprüche 1 bis 3, **dadurch gekennzeichnet, dass** zur Arretierung der Umsetz- oder Transportstellung (U, T) der Schnellaushubeinheit (16) der Endanschlag (18) am Gehäuse (3) angeordnet ist.

5. Umkehrfräse (1) nach einem der Ansprüche 1 bis 4, **dadurch gekennzeichnet, dass** die Tiefenführung (7) als eine mechanische Linearführung ausgebildet ist.

6. Umkehrfräse (1) nach einem der Ansprüche 1 bis 5, **dadurch gekennzeichnet, dass** die Tiefenführung (7) an der Schnellaushubeinheit (16) und dem Gehäuse (3) angeordnet ist, wobei die Tiefenführung (7) in die eine Richtung einen Anschlag (12) aufweist und in der anderen Richtung frei verschiebbar ist.

7. Umkehrfräse (1) nach einem der Ansprüche 1 bis 6, **dadurch gekennzeichnet, dass** die Schnellaushubeinheit (16) eine Trägervorrichtung zur Halterung der Walze (5) aufweist.

8. Umkehrfräse (1) nach einem der Ansprüche 1 bis 7, **dadurch gekennzeichnet, dass** die Schwenkelemente (8) fest an der Trägervorrichtung (11) angeordnet sind.

9. Umkehrfräse (1) nach einem der Ansprüche 1 bis 8, **dadurch gekennzeichnet, dass** die Tiefenführung (7) einen am Gehäuse (3) angeordneten Lagerbock (13) und eine mit der Schnellaushubeinheit (16) verbundene Tiefenführungsschiene (14) aufweist, wobei die Tiefenführungsschiene (14) im Lagerbock (13) verschiebbar angeordnet ist.

10. Umkehrfräse (1) nach Anspruch 9, **dadurch gekennzeichnet, dass** die Tiefenführungsschiene (14) gelenkig an der Schnellaushubeinheit (16) angeordnet ist.

11. Verfahren zum Umsetzten oder Transportieren einer, an einer einachsigen, Holmen geführten Arbeitsmaschine (2), frontseitig angebauten Umkehrfräse (1), wobei über eine einseitig, arretierende Tiefenführung (7) die Bodeneintauchtiefe der Messerwelle (4) eingestellt wird,
Bearbeiten einer Bearbeitungsspur des Bodens in Arbeitsfahrtrichtung (a), mittels der in den Boden, über die Schnellaushubeinheit (16) definierten Eintauchtiefe für die Arbeitsstellung (A), eingetauchten Messerwelle (4) bis zum Ende einer Bahn, Umsetzen der Umkehrfräse (1) an die Ausgangsposition einer anschliessenden Bearbeitungsspur und erneutes Bearbeiten der anschliessenden Bearbeitungsspur des Bodens in Arbeitsfahrtrichtung (a) mittels der in den Boden, über die Schnellaushubeinheit (16) definierten Eintauchtiefe für die Arbeitsstellung (A), eingetauchten Messerwelle (4) bis zum Ende der Bearbeitungsspur, wobei zum Umsetzen oder Transportieren der Umkehrfräse (1) die Walze (5) der Schnellaushubeinheit (16) als Stützwalze genutzt wird, damit sich die Messerwelle (4) oberhalb des Bodens befindet und die Umkehrfräse (1) sich währenddessen in einer Transportstellung befindet, wobei die Schnellaushubeinheit (16) durch Ausheben der Messerwelle (4) aus dem Boden in die Position der Transportstellung (T) oder Umsetzstellung (U) klappt, indem die Schnellaushubeinheit (16) autonom um den Drehpunkt (9) schwenkt bis zu einem Endanschlag (18) und dort während der Fahrtrichtung in Umsetzfahrtrichtung (u) verbleibt und erst bei einem Richtungswechsel in die Arbeitsfahrtrichtung (a) autonom in die Position der Arbeitsstellung (A) klappt, **dadurch gekennzeichnet, dass** die Schnellaushubeinheit (16) zwischen dem Endanschlag (18) in der Umsetz- oder Transportstellung und einem Anschlag (12) in Arbeitsstellung frei schwenkbar angeordnet ist, ohne jegliche Arretierungen.

12. Verfahren nach Anspruch 11, **dadurch gekennzeichnet, dass** zwischen dem Endanschlag (18) in Umsetz- oder Transportstellung (U, T) und dem Anschlag (12) in Arbeitsstellung (A) sich die Schnellaushubeinheit (16) frei bewegen bzw. schwenken lässt.

## Claims

1. Reversing cutter (1) for front installation with driving connection on a single-axle working machine (2) which is guided on bars, containing a housing (3), a blade shaft (4) which is arranged therein and which extends transversely relative to the travel direction, a rapid excavation unit (16) which is arranged behind the housing (3) when viewed in a working travel direction a, a sieve unit (6), a depth guide (7) for height adjustment of the rapid excavation unit (16), wherein the rapid excavation unit (16) in a working position (A) defines the soil immersion depth of the blade shaft (4) and during the transfer operation (U) or transport (T) in a transfer or transport position (U, T) acts as a support roller in order to raise the blade shaft (4) from the ground, wherein the rapid excavation unit (16) has a roller (5) and pivot elements (8), wherein the rapid excavation unit (16) is pivotably secured to the housing (3) by means of the pivot elements (8), wherein the pivot elements (8) are arranged or supported so as to be able to be freely pivoted at a rotation location (9) on the housing (3), and the rapid excavation unit (16) purely by pivoting the rapid excavation unit (16) about the rotation location (9) can be moved into the working position (A) or into the transfer or transport position (U. T), **characterized in that** the rapid excavation unit (16) is arranged so as to be able to be freely pivoted between an end stop (18) in the transfer or transport position (U, T) and a stop (12) in the working position (A) without any locking actions.

2. Reversing cutter (1) according to claim 1, **characterized in that** the stop (12) for the working position (A) is arranged on the depth guide (7).

3. Reversing cutter (1) according to either claim 1 or **2, characterized in that** the depth guide (7) is in the form of a linear guide and configured so as to be linearly displaceable and when the rapid excavation unit (16) is pivoted between the positions (A, U; T) is also autonomously displaced.

4. Reversing cutter (1) according to any one of claims 1 to 3, **characterized in that** in order to lock the transfer or transport position (U, T) of the rapid excavation unit (16) the end stop (18) is arranged on the housing (3).

5. Reversing cutter (1) according to any one of claims 1 to 4, **characterized in that** the depth guide (7) is in the form of a mechanical linear guide.

6. Reversing cutter (1) according to any one of claims 1 to 5, **characterized in that** the depth guide (7) is arranged on the rapid excavation unit (16) and the housing (3), wherein the depth guide (7) has a stop in one direction and can be freely displaced in the other direction.

7. Reversing cutter (1) according to any one of claims 1 to 6, **characterized in that** the rapid excavation unit (16) has a carrier apparatus for retaining the roller (5).

8. Reversing cutter (1) according to any one of claims 1 to 7, **characterized in that** the pivot elements (8) are securely arranged on the carrier apparatus (11).

9. Reversing cutter (1) according to any one of claims 1 to 8, **characterized in that** the depth guide (7) has a bearing block (13) which is arranged on the housing (3) and a depth guide rail (14) which is connected to the rapid excavation unit (16), wherein the depth guide rail (14) is displaceably arranged in the bearing block (13).

10. Reversing cutter (1) according to claim 9, **characterized in that** the depth guide rail (14) is arranged in an articulated manner on the rapid excavation unit (16).

11. Method for transferring or transporting a reversing cutter (1) which is installed on the front of a single-axle working machine (2) which is guided on bars, wherein the soil immersion depth of the blade shaft (4) is adjusted via a depth guide (7) which locks at one side, cultivating a cultivation track of the soil in a working travel direction (a) by means of the blade shaft (4) which is immersed in the soil over the immersion depth defined by the rapid excavation unit (16) for the working position (A) as far as the end of a track,
transferring the reversing cutter (1) to the starting position of a subsequent cultivation track and again cultivating the subsequent cultivation track of the soil in a working travel direction (a) by means of the blade shaft (4) which is immersed in the soil over the immersion depth defined by the rapid excavation unit (16) for the working position up to the end of the cultivation track, wherein in order to transfer or transport the reversing cutter (1) the roller (5) of the rapid excavation unit (16) is used as a support roller so that the blade shaft (4) is located above the soil and the reversing cutter (1) is in the meantime located in a transport position, wherein the rapid excavation unit (16) by lifting the blade shaft (4) from the soil folds into the position of the transport position (T) or transfer position (U) by the rapid excavation unit (16) pivoting autonomously about the rotation location (9) up to an end stop (18) and remaining there during the travel direction in the transfer travel direction (u) and only in the event of a change of direction in the working travel direction (a) autonomously folding into the position of the working position (A), **characterized in that** the rapid excavation unit (16) is arranged so as to be able to be freely pivoted between the end stop (18) in the transfer or transport position and a stop (12) without any locking actions.

12. Method according to claim 11, **characterized in that** between the end stop (18) in the transfer or transport position (U, T) and the stop (12) in the working position (A) the rapid excavation unit (16) can be freely moved or pivoted.

## Revendications

1. Fraise réversible (1) destinée à être montée à l'avant d'une machine de travail (2) à un seul essieu guidée au moyen de longerons, et à être reliée à celle-ci de façon à être entraînée, comprenant un boîtier (3), un arbre porte-lames (4), agencé dans celui-ci et s'étendant transversalement à la direction de déplacement, une unité (16) de relevage rapide agencée derrière le boîtier (3) vue dans le sens de l'avancement, une unité de tamisage (6), un guide de profondeur (7) pour le réglage en hauteur de l'unité (16) de relevage rapide, l'unité (16) de relevage rapide définissant, en position de travail (A), la profondeur de pénétration dans le sol de l'arbre porte-lames (4) et servant, pendant le processus de déplacement (U) ou de transport (T), dans une position de déplacement ou de transport (U, T), de rouleau d'appui pour soulever l'arbre porte-lames (4) du sol, l'unité (16) de relevage rapide comprenant un rouleau (5) et des éléments pivotants (8), l'unité (16) de relevage rapide étant reliée de manière pivotante au boîtier (3) par l'intermédiaire des éléments pivotants (8), les éléments pivotants (8) étant montés ou agencés de manière à pouvoir pivoter librement autour d'un point de pivotement (9) sur le boîtier (3), et l'unité (16) de relevage rapide étant apte à être amenée dans la position de travail (A) ou dans la position de déplacement ou de transport (U, T) par simple pivotement de l'unité (16) de relevage rapide autour du point de pivotement (9), **caractérisé en ce que** l'unité (16) de relevage rapide est agencée de manière à être apte à librement pivoter entre une butée d'extrémité (18) dans la position de déplacement ou de transport (U, T) et une butée (12) dans la position de travail (A), sans aucun dispositif de blocage.

2. Fraise réversible (1) selon la revendication 1, **caractérisée en ce que** la butée (12) pour la position de travail (A) est agencée sur le guide de profondeur (7).

3. Fraise réversible (1) selon l'une des revendications 1 ou 2, **caractérisée en ce que** le guide de profondeur (7) est conçu sous la forme d'un guide linéaire et est apte à être déplacé linéairement et se déplace de manière autonome lors du pivotement de l'unité (16) de relevage rapide entre les positions (A, U ; T).

4. Fraise réversible (1) selon l'une des revendications 1 à 3, **caractérisée en ce que** la butée d'extrémité (18) est agencée sur le boîtier (3) de façon à bloquer la position de déplacement ou de transport (U, T) de l'unité (16) de relevage rapide.

5. Fraise réversible (1) selon l'une des revendications 1 à 4, **caractérisée en ce que** le guide de profondeur (7) est conçu sous la forme d'un guide linéaire mécanique.

6. Fraise réversible (1) selon l'une des revendications 1 à 5, **caractérisée en ce que** le guide de profondeur (7) est agencé sur l'unité (16) de relevage rapide et le boîtier (3), le guide de profondeur (7) comprenant une butée (12) dans une direction et étant apte à se déplacer librement dans l'autre direction.

7. Fraise réversible (1) selon l'une des revendications 1 à 6, **caractérisée en ce que** l'unité (16) de relevage rapide comprend un dispositif de support pour maintenir le rouleau (5).

8. Fraise réversible (1) selon l'une des revendications 1 à 7, **caractérisée en ce que** les éléments pivotants (8) sont agencés de manière fixe sur le dispositif de support (11).

9. Fraise réversible (1) selon l'une des revendications 1 à 8, **caractérisée en ce que** le guide de profondeur (7) comprend un support de palier (13) agencé sur le boîtier (3) et un rail (14) de guidage de profondeur relié à l'unité (16) de relevage rapide, le rail (14) de guidage de profondeur étant agencé de manière coulissante dans le support de palier (13).

10. Fraise réversible (1) selon la revendication 9, **caractérisée en ce que** le rail (14) de guidage de profondeur est agencé de manière articulée sur l'unité (16) de relevage rapide.

11. Procédé pour déplacer ou transporter une fraise réversible (1) montée à l'avant d'une machine de travail (2) à un essieu guidée au moyen de longerons, la profondeur de pénétration dans le sol de l'arbre porte-lames (4) étant réglée par un guide de profondeur (7) à blocage unilatéral,
travailler une trace de travail du sol dans un sens d'avancement (a) au moyen de l'arbre porte-lames (4) pénétrant dans le sol à la profondeur définie pour la position de travail (A) par l'unité (16) de relevage rapide, jusqu'à la fin d'une bande,
déplacer la fraise réversible (1) à la position de départ d'une trace de travail suivante et travailler à nouveau la trace de travail suivante du sol dans le sens de déplacement de travail (a) au moyen de l'arbre porte-lames (4) pénétrant dans le sol selon la profondeur de pénétration définie par l'unité (16) de relevage rapide, pour la position de travail (A), jusqu'à la fin de la trace de travail, le rouleau (5) de l'unité (16) de relevage rapide étant utilisé en tant que rouleau d'appui pour déplacer ou transporter la fraise réversible (1), afin que l'arbre porte-lames (4) se trouve au-dessus du sol et que la fraise réversible (1) se trouve pendant ce temps en position de transport,
l'unité (16) de relevage rapide basculant dans la position de transport (T) ou de déplacement (U) par relevage de l'arbre porte-lames (4) hors du sol, l'unité (16) de relevage rapide pivotant de manière autonome autour du point de pivotement (9) jusqu'à une butée de fin de course (18) et restant dans cette position pendant le déplacement dans le sens de déplacement (u) et ne basculant de manière autonome dans la position de travail (A) qu'au moment du changement de direction dans le sens de travail (a), **caractérisé en ce que** l'unité (16) de relevage rapide est agencée de manière à pouvoir pivoter librement, sans aucun dispositif de blocage, entre la butée d'extrémité (18) en position de déplacement ou de transport et une butée (12) en position de travail.

12. Procédé selon la revendication 11, **caractérisé en ce que** l'unité (16) de relevage rapide est apte à se déplacer ou pivoter entre la butée d'extrémité (18) en position de déplacement ou de transport (U, T) et la butée (12) en position de travail (A).
